# EUROPÄISCHE PATENTANMELDUNG

(11) **EP 1 260 599 A2**
(43) Veröffentlichungstag der Anmeldung: **27.11.2002**
(21) Anmeldenummer: 02450126.4
(22) Anmeldetag: 23.05.2002
(51) Int. Cl.: C22B 7/00, C22B 1/10, C21B 11/06, C21B 13/08, F27B 7/10, F23G 5/00, F23C 10/00, F23C 11/00, C10J 3/46, C21C 5/35, C21C 5/56

(54) **Drehtrommelofen zum pyrometallurgischen Aufarbeiten von Abfallstoffen in Wirbelbett**

(30) Priorität: 25.05.2001 AT 8342001
(71) Anmelder: Tribovent Verfahrensentwicklung GmbH, 6700 Lorüns (AT)
(72) Erfinder: Edlinger, Alfred Dipl. Ing., 6780 Bartholomäberg (AT)
(74) Vertreter: Haffner, Thomas M., Dr.

(57) **Zusammenfassung**

Bei einem Einschmelz-Oxidationsreaktor zum pyrometallurgischen Aufarbeiten von mit brennbaren Anteilen belasteten Abfallstoffen, wie z.B. Hausmüll, Straßen-Abbruch-Asphalt oder Shredder-Leichtfraktionen aus der Entsorgung von Kraftfahrzeugen, ist dieser als Wirbelbett-Reaktor (1) ausgebildet, der mit einem Kipp- bzw. Schwenkantrieb (8) verbunden ist und in der Reaktorwand Düsen (4) für das Einblasen von Gasen, Brennstoffen bzw. Additiven aufweist.

## Beschreibung

Die Erfindung bezieht sich auf eine Einrichtung zum pyrometallurgischen Aufarbeiten von mit brennbaren Anteilen belasteten Abfallstoffen, wie z.B. Hausmüll, Straßen-Abbruch-Asphalt oder Shredder-Leichtfraktionen aus der Entsorgung von Kraftfahrzeugen, mit einem Einschmelz-Oxidationsreaktor.

Aus der AT 403 772 B ist ein Verfahren zum Aufarbeiten von Müll wie z B. Restmüll, Haushaltsmüll, Gewerbemüll, Sperrmüll oder Klärschlamm bekanntgeworden, bei welchem der Müll bzw. Klärschlamm unter sauerstoffarmer Atmosphäre einer Pyrolyse unterworfen wird. Als Einsatzmaterial kommt naturgemäß auf Grund der hohen organischen Bestandteile auch die sogenannte Shredder-Leichtfraktion aus der Entsorgung von Kraftfahrzeugen in Betracht. Bei der in der AT 403 772 B beschriebenen Pyrolyse wird in der Folge nach der Vorbehandlung eine mechanische Aufbereitung nachgeschaltet und insbesondere eine Siebung vorgenommen, wobei die von Metallen mechanisch getrennte Grobfraktion der Siebung einem Metallbadreaktor aufgegeben und die Feinfraktion der Siebung in das Metallbad mit einem Trägergas eingedüst wird. Neben diesem Vorschlag ist es bekannt, Hausmüll und Shredder-Leichtfraktionen zu deponieren oder thermisch zu entsorgen. Die in Kraftwerken in Form von Dampf anfallende Energie wird hiebei in der Regel verstromt, wobei ein Teil der thermischen Energie auch zur Fernwärmeversorgung herangezogen wird. Die Verbrennungsrückstände werden in derartigen Anlagen deponiert, wobei bereits vorgeschlagen wurde, gewisse Fraktionen der Rückstände im Straßenbau einzusetzen. Bei einer derartigen Verwendung bleiben jedoch eine Reihe von umweltrelevanten Fragen ungelöst, wobei den bekannten Verfahren gemeinsam ist, dass die thermische Energie der Abfallstoffe nur ungenügend genutzt wird.

Die Erfindung zielt nun darauf ab, eine Einrichtung der eingangs genannten Art zu schaffen, mit welcher es gelingt, den hohen Heizwert insbesondere von Shredder-Leichtfraktionen in geeigneter Weise zu nutzen, um beispielsweise unmittelbar nach einer Reduktion über einem Eisenbad und einer Schlackengranulation zementgängiges Material herzustellen. Die erfindungsgemäße Einrichtung soll insbesondere dazu dienen, die thermische Energie bei der Verbrennung und beim Schmelzen für die Kalzinierung von zugesetztem Kalkstein, Kalkmergel oder Mergel und Tongemischen nutzbar zu machen, wodurch sich wesentliche Materialverbesserungen des nach einer Schlackengranulation gewonnenen Materials erzielen lassen. Zur Lösung dieser Aufgabe besteht die erfindungsgemäße Einrichtung im wesentlichen darin, dass der Einschmelz-Oxidationsreaktor als Wirbelbett-Reaktor ausgebildet ist, dass der Wirbelbett-Reaktor mit einem Kipp- bzw. Schwenkantrieb verbunden ist und in der Reaktorwand Düsen für das Einblasen von Gasen aufweist. Dadurch dass der Einschmelzoxidationsvorgang in dem erfindungsgemäßen Einschmelz-Oxidationsreaktor in einer Wirbelschicht bzw. in einem Wirbelbett vorgenommen wird, gelingt es, den hohen Heizwert des Einsatzmateriales und insbesondere der Shredder-Leichtfraktionen zur Kalzination, Entschwefelung und Verschlackung von Kalkstein zu verwenden, wobei die atmosphilen Schwermetalle und insbesondere Quecksilber, Zink und Blei entweichen. Die restlichen Schwermetalle werden verschlackt bzw. bilden einen metallischen Regulus, der hauptsächlich aus Eisen, Kupfer, Nickel und Zinn besteht. In der Wirbelschicht bzw. im Wirbelbett kann somit die thermische Energie bzw, der Heizwert der Einsatzmaterialien in gezielter Weise für gewünschte zusätzliche Reaktionen wie beispielsweise die Kalzination genutzt werden, wobei dadurch, dass der Einschmelz-Oxidationsreaktor mit einem Kipp- und Schwenkantrieb verbunden ist, sowohl die Beschickung als auch der Abstich des Reaktors in einfacher Weise gelingt. Der Einschmelz-Oxidationsreaktor kann hiebei konstruktiv besonders einfach ausgebildet werden, und es ist lediglich erforderlich, in der Reaktorwand Düsen für das Einblasen von Gasen vorzusehen, um eine entsprechend stabile Wirbelschicht bzw. das gewünschte Wirbelbett im Einschmelz-Oxidations- bzw. Schmelzreaktor aufrechtzuerhalten. Die Wirbelschicht, welche außerhalb des ausgebildeten Metallbades im Einschmelz-Oxidationsreaktor aufrechterhalten werden kann, kann hiebei gesondert ausgebracht werden und in bekannter Weise einem Eisenbad-Reduktionsreaktor zugeführt werden. Nach einer anschließenden Schlackengranulation kann unmittelbar zementgängiges Material gewonnen werden, wobei die für die Abgasaufbereitung erforderlichen Einrichtungen dem Stand der Technik entsprechen.

Mit Vorteil ist die erfindungsgemäße Ausbildung so getroffen, dass der Reaktor im wesentlichen rohrförmig ausgebildet und um die Rohrachse schwenkbar gelagert ist, wodurch sich ein baulich und konstruktiv besonders einfaches Aggregat ergibt, mit welchem es ohne weiteres gelingt, durch Verwendung des Schwenkantriebes als Rüttelantrieb die Ausbildung einer stabilen Wirbelschicht bei geringem Gaseintrag zu gewährleisten.

Um insbesondere nach Ausbildung eines entsprechenden Metallbades auch weiterhin die Reaktion in der Wirbelschicht aufrechtzuerhalten und die Düsen für das Einblasen von Gasen, Brennstoff oder dergleichen von der unmittelbaren Belastung mit der metallischen Schmelze fernzuhalten, ist mit Vorteil die Ausbildung so getroffen, dass die in der Wand angeordneten Düsen in einem Zentriwinkelbereich angeordnet sind, welcher sich ausgehend von der Chargieröffnung zwischen 135° und 315° erstreckt. Bei einer derartigen Ausbildung gelingt es, durch teilweises Verschwenken des Einschmelz-Oxidationsreaktors in eine Position, in welcher ein Abstich noch nicht vorgenommen wird, die Düsen aus dem Bereich des sich bildenden bzw. ausseigernden Metallbades herauszubewegen und weiterhin zur Aufrechterhaltung einer stabilen Wirbelschicht zu verwenden, wodurch die gewünschte Reaktionszeit in der Wirbelschicht entsprechend verlängert werden kann und insbesondere eine vollständige Oxidation ermöglicht wird, bevor ein Abstich erfolgt.

Mit Vorteil ist die erfindungsgemäße Ausbildung hiebei so getroffen, dass der Schwenkantrieb zu einer Rüttelwippbewegung mit zyklischer Bewegungsrichtungsumkehr antreibbar ist, wobei sich die Rüttelbewegung vorzugsweise über einen Zentriwinkel des Rohrquerschnittes von kleiner 60°, vorzugsweise kleiner 45°, erstreckt, wodurch sichergestellt wird, dass trotz der Rüttelbewegung ein vorzeitiger Austrag des Materials verhindert wird und gleichzeitig die in der Rohrwandung angeordneten Düsen zur Stabilisierung des Wirbelbettes wirksam bleiben.

In besonders einfacher Weise kann die Ausbildung so getroffen sein, dass am Umfang des Wirbelschicht-Reaktors regulierbare Düsen und/oder Brenner angeordnet sind, wodurch die erforderliche Schmelzwärme und die erforderlichen Reaktionstemperaturen in geeigneter Weise eingestellt werden können.

Insgesamt wird somit die thermische Energie bzw. der Heizwert der mit brennbaren Anteilen belasteten Abfallstoffe weitestgehend für chemische Umsetzungen und insbesondere ein Kalzinieren von Kalk nutzbar gemacht, wodurch sich die Zusammensetzung der erzielbaren Schlacke entsprechend an die gewünschte Zusammensetzung für zementgängige Materialien annähern läßt, ohne dass nachfolgend aufwendige Konditionierungsschritte erforderlich wären. Gleichzeitig kann in den nachgeschalteten Metallbad-Reduktionsreaktor, in welchem Metalloxyd in ein Gußeisenbad reduziert werden kann, eine entsprechende Abreicherung der Schlacken an Schwermetallen bzw. Schwermetalloxyden erzielt werden, wodurch umweltverträgliche Endprodukte nach der Schlackengranulation erzielt werden.

Die gebildete Schlackenschmelze mit sehr niedrigem Metalloxydgehalt kann in konventionellen Schlackengranulatoren zu zementgängigem Sand granuliert werden.

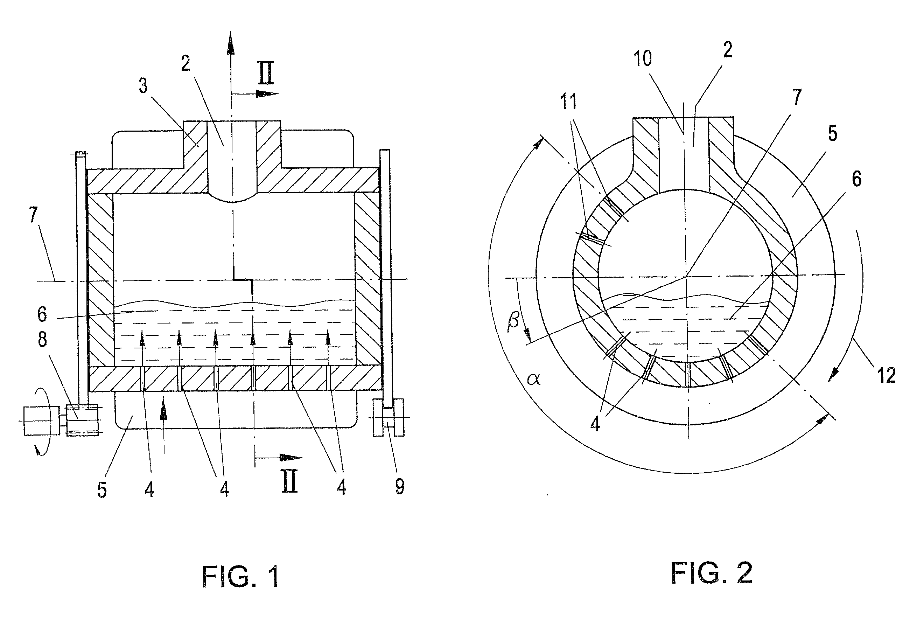

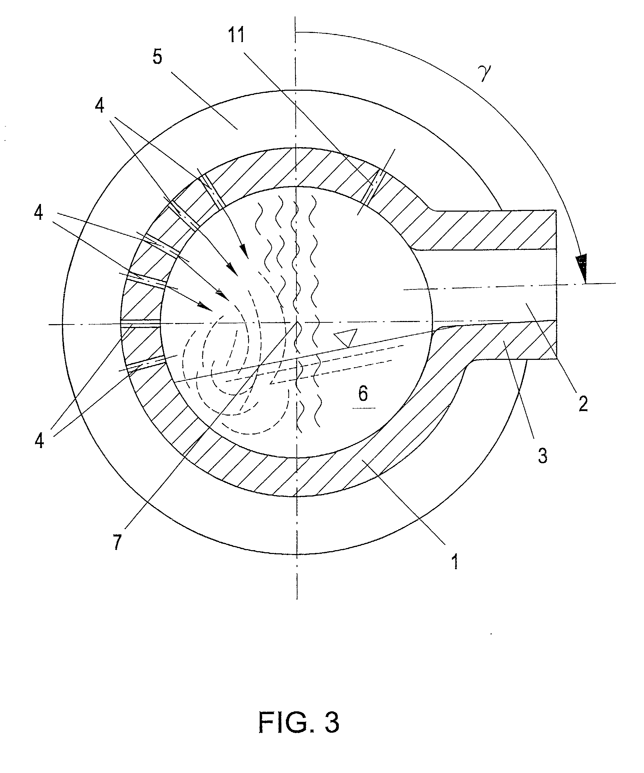

Die Erfindung wird nachfolgend an Hand eines in der Zeichnung schematisch dargestellten Ausführungsbeispieles näher erläutert. In dieser zeigen Figur 1 einen Querschnitt durch eine erfindungsgemäße Einrichtung, Figur 2 einen Schnitt nach der Linie II-II der Figur 1 und Figur 3 einen Schnitt analog der Figur 2 durch eine abgewandelte Ausbildung des Reaktors.

In Figur 1 ist ein Wirbelschicht-Schmelzreaktor 1 dargestellt, dessen Chargier-, Abgas-, und Abgußöffnung 2 einen Flansch 3 am Mantel des rohrförmigen Reaktors 1 angeschlossen hat. Im Mantel des Reaktors 1 sind weiters Düsen 4 ersichtlich, welche über einen Düsenkasten 5 mit Gas, Brennstoff und gegebenenfalls Additiven beschickt werden können. Über die Chargieröffnung wird Shredder-Leichtfraktion gemeinsam mit Kalziumkarbonat aufgegeben, worauf im Inneren des Reaktors 1 ein Wirbelbett 6 aufgebaut wird und das Wirbelbett gezündet wird. Zu diesem Zweck können einzelne der Düsen 4 als Zündbrenner eingesetzt werden.

Das rohrförmige Gehäuse des Reaktors 1 ist um die zentrale Achse 7 schwenkbar, wobei der Schwenkantrieb schematisch mit 8 angedeutet ist. Auf der gegenüberliegenden Seite erfolgt eine Lagerung analog der Lagerung eines Drehrohrofens, wie sie mit 9 schematisch angedeutet ist.

Im Querschnitt nach der Linie II-II der Figur 2 ist die Anordnung der Düsen bzw. Brenner 4 ersichtlich und insbesondere ersichtlich, dass sich diese Düsen bzw. Brenner über einen Zentriwinkel α ausgehend von der Achse 10 der Chargieröffnung erstreckt, wobei sich dieser Zentriwinkel α über den 2., 3. und 4. Quadranten ausgehend von dieser Achse 10 erstreckt. Beginnend mit einer Position von etwa 135° ausgehend von der Achse 10 sind derartige Düsen bis etwa zu einer Position 315°, von der Achse 10 gerechnet, vorgesehen, sodass sich die Düsen etwa über die Hälfte des Umfanges und damit einen Zentriwinkel von etwa 180° erstrecken. Zusätzlich zu den Düsen 4 sind einzelne dieser Düsen nun gesondert bezeichnet und mit 11 identifiziert. Diese Düsen 11 liegen bereits zu Beginn und unmittelbar nach dem Chargiervorgang oberhalb des Wirbelbettes aus Shredder-Leichtfraktion und Kalkstein und dienen insbesondere dazu, Flusen oder sonstige Leichtstoffe, welche aufsteigen könnten und in die Abgasleitung gelangen könnten, mit hohem Impuls wieder in die Wirbelschicht einzublasen und zu rezirkulieren. Über den Drehantrieb 8 wird der Reaktor 1 im Betrieb auch noch über einen Zentriwinkel β zu einer Wippbewegung angeregt, sodass durch die überlagerte Wippbewegung eine optimale Durchmischung des groben, sehr inhomogenen Einsatzgutes erfolgt und ein guter Stoff- und Energieaustausch ermöglicht wird.

Nach dem Aufbau des Wirbelbettes und dem Zünden kann Kalkstein bei Temperaturen von 600 bis 900°C kalziniert werden, wobei unmittelbar über diesen Temperaturen die Verschlackung einsetzt und gebildetes Kohlenmonoxyd nachverbrannt werden kann. Sobald eine Verflüssigung eintritt, kann der Reaktor 1 um die Achse 7 verschwenkt werden, sodass der Bereich der Düsen 4 nach einem Verschwenken in Richtung des Pfeiles 12 aus dem Bereich der Schmelze wiederum austaucht, wie dies in Figur 3 dargestellt ist. In der Position nach Figur 3 ist die Chargierabgas- bzw. Abgußöffnung 2 um einen Winkel γ von etwas weniger als 90° verschwenkt, wobei alle Düsen 4 oberhalb der sich bildenden Schlackenschmelze/Metallsumpfes angeordnet sind und zu einer weiteren Verwirbelung der auf dem Metallbad aufliegenden Wirbelschicht beitragen. Durch Einblasen von Luft in den Düsenkasten 5 wird eine Schlackenpelzbildung und damit ein Feuerfestschutz der Düsen erzielt und durch Herausdrehen dieser Düsen aus der Ebene der Schlacken/Metallbadschmelze noch höhere Standzeiten erreicht. Wenn Schmelze vorlieg, sind die ursprünglichen "Bodendüsen" aus dem Schmelzebereich herausgeschwenkt und dienen im "Brenner-Modus" dem Fertigschmelzen. Die Feuerfestzustellung kann bevorzugt aus Siliziumkarbid bestehen. Zum Fertigschmelzen können die Düsen 4 als Brenner eingesetzt werden, worauf die Schmelze über die Ausgußöffnung 2 auf ein nachfolgendes Aggregat wie beispielsweise einen Eisenbadreaktor ausgetragen werden kann. In diesem Eisenbadreaktor kann eine Reduktion der Metalloxydanteile der Schlacke erzielt werden, worauf nach vollständiger Reduktion eine konventionelle Granulation vorgenommen werden kann, mit welcher unmittelbar zementgängiges Material mit hoher Umweltverträglichkeit hergestellt werden kann. Aufgrund der Kalksteinzugabe wird gleichzeitig eine hohe Schwefeleinbindung insbesondere bei unterstöchiometrischer Fahrweise des Reaktors sichergestellt, wobei bereits im Schmelz-Oxidationreaktor eine entsprechende Vorabscheidung von Metallen erzielt werden kann, sodass die auf das nachfolgende Eisenbad gelangende Schlackenschmelze bereits vorgereinigt werden kann.

Die asymmetrisch angeordneten Wirbelbettdüsen erhöhen die Wirbelbettumwälzung und die Turbulenz, sodass ein höherer Füllgrad des Wirbelschicht-Reaktors erzielt werden kann. Das Wirbelbett hat im Prinzip etwa das 3- bis 10fache Volumen im Vergleich zur Schlackenschmelze, wobei das Wirbelbettvolumen während des Einschmelzprozesses kontinuierlich abnimmt.

Insgesamt lassen sich mit dem erfindungsgemäßen Reaktor Shredder-Leichtfraktionen gemeinsam mit grobkörnigem Kalkstein unmittelbar einsetzen, wobei durch die überlagerte Wippbewegung und das Einblasen eine hoch turbulente Wirbelschicht erzielt wird, welche eine optimale Durchmischung des sehr inhomogenen Einsatzgutes und damit einen guten Stoff- und Energieaustausch gewährleistet. Auch die Kühlenergie geht nicht verloren, da sie für die Schlackenpelzbildung genutzt wird. Über den Windkasten 5 kann Verbrennungsluft eingetragen werden, wobei in Übereinstimmung mit den thermischen Bedürfnissen über diesen Windkasten 5 natürgemäß auch gasförmige Brennstoffe eingedüst werden können, sofern nicht einzelne der Düsen direkt mit einer Brennstoffleitung verbunden werden. Oberhalb der Wirbelschicht erfolgt eine wirkungsvolle Nachverbrennung, sodass die thermische Energie weitestgehend in der Wirbelschicht genutzt werden kann.

Durch geeignete Wahl der Charge kann als Zielzusammensetzung der Schlacke eine C/S-Basizität von 0,3 bis 1,2, ein Al₂O₃-Gehalt von 3 bis 15 % und ein Fe₂O₃-Gehalt von maximal 5 % erzielt werden, wobei das Produkt glasig bzw. amorph anfällt.

## Patentansprüche

1. Einrichtung zum pyrometallurgischen Aufarbeiten von mit brennbaren Anteilen belasteten Abfallstoffen, wie z.B. Hausmüll, Straßen-Abbruch-Asphalt oder Shredder-Leichtfraktionen aus der Entsorgung von Kraftfahrzeugen, mit einem Einschmelz-Oxidationsreaktor, **dadurch gekennzeichnet, dass** der Einschmelz-Oxidationsreaktor als Wirbelbett-Reaktor (1) ausgebildet ist, dass der Wirbelbett-Reaktor (1) mit einem Kipp- bzw. Schwenkantrieb (8) verbunden ist und in der Reaktorwand Düsen (4) für das Einblasen von Gasen aufweist.

2. Einrichtung nach Anspruch 1, **dadurch gekennzeichnet, dass** der Reaktor (1) im wesentlichen rohrförmig ausgebildet und um die Rohrachse (7) schwenkbar gelagert ist.

3. Einrichtung nach Anspruch 2, **dadurch gekennzeichnet, dass** die Chargieröffnung (2) in eine Abstichposition verschwenkbar ist und dass die in der Wand angeordneten Düsen (4) in einem Zentriwinkelbereich angeordnet sind, welcher sich ausgehend von der Chargieröffnung (2) zwischen 135° und 315° erstreckt.

4. Einrichtung nach Anspruch 1, 2 oder 3, **dadurch gekennzeichnet, dass** der Schwenkantrieb (8) zu einer Rüttelwippbewegung mit zyklischer Bewegungsrichtungsumkehr antreibbar ist, wobei sich die Rüttelbewegung vorzugsweise über einen Zentriwinkel des Rohrquerschnittes von kleiner 60°, vorzugsweise kleiner 45°, erstreckt.

5. Einrichtung nach einem der Ansprüche 1 bis 4, **dadurch gekennzeichnet, dass** am Umfang des Wirbelschicht-Reaktors (1) regulierbare Düsen und/oder Brenner angeordnet sind.
